# EUROPEAN PATENT SPECIFICATION

(11) **EP 4 253 147 B1**
(45) Date of publication and mention of the grant of the patent: **04.03.2026**
(21) Application number: 23165960.8
(22) Date of filing: 31.03.2023
(51) Int. Cl.: B60N 3/04, B60R 13/01, B60R 7/08

(54) **MAT FOR COVERING A CABIN FLOOR**
MATTE ZUM ABDECKEN EINES KABINENBODENS
TAPIS POUR RECOUVRIR UN PLANCHER DE CABINE

(30) Priority: 01.04.2022 NL 2031480
(43) Date of publication of application: 04.10.2023
(73) Proprietor: DAF Trucks N.V., 5643 TW Eindhoven (NL)
(72) Inventor: VAN GALEN, Haro, 5643 TW Eindhoven (NL)
(74) Representative: V.O.

(56) References cited:
- WO-A1-86/06691
- US-A1- 2010 040 824

## Description

The invention relates to a mat for covering a cabin floor of a vehicle.

Vehicles, such as trucks, vans, buses or passenger cars, can be employed for different purposes, and in different operating conditions. This may create a plethora of cabin configurations, tailored to the driver's safety or personal preference. For example, long haul trucks may be provided with more cabin storage compartments than passenger cars. A bus cabin, in which the driver may remain seated for extended periods of time, may be more ergonomically designed than the cabin of a city delivery van, from which the driver is frequently on- and off boarding. Moreover, depending on the country or region, the driver can be seated on the left or right hand side of the vehicle. Vehicles can e.g. be employed in snowy, wet, or sandy environments, which may be brought inside the cabin when the driver is boarding the vehicle. In such cases it may be desirable to avoid contamination of the cabin body, e.g. by ingress of fluid or dirt into creases between the cabin and accessory components mounted thereon. As such, build quality of the cabin interior can be an important aspect.

Known cabin assembly processes include fixating accessory components on top of floor mats through holes in the mats on separate supports fixed to the cabin body. However, due to the presence of holes in the mats, fluids or dirt may still leak from the driver to the cabin floor. Furthermore, to accommodate for cabin configurations that are not included in the base design of the vehicle, the cabin body may need to be adjusted, e.g. by adding specific fixations to the floor of the cabin, which may lead to high modification costs.

WO86/06691 describes a removable accessory mat designed to overlie and protect carpeted automobile floors.

It is an object of the present invention to accommodate for a large variety of cabin configurations for different operating conditions, without any modifications to the cabin.

### SUMMARY

In summary, a mat is provided for covering a cabin floor of a vehicle. The mat comprises a multi-layer and an accessory mount. The multi-layer comprises a foam material layer and a formable material layer. The accessory mount comprises an anchoring arrangement for anchoring a mat accessory to the accessory mount, and a positioning arrangement for positioning the accessory mount in a moulding tool, thereby providing a mould insert for forming the formable material layer to a shape of the accessory mount. The accessory mount is shaped with a cross section that is narrower towards a top surface of the mat and wider towards an interior of the mat, for providing a form-closing connection between the accessory mount and the formable material layer, so that the accessory mount is form-locked by the formable material layer.

By providing a mould insert, the accessory mount is form-locked by the formable material layer of the mat to provide a means for anchoring different types of mat accessories, e.g. in a leak-proof fashion without connecting through the mat to the cabin floor. The cross section of the accessory mount provides a form closing connection that can be positioned anywhere on the formable material layer, thereby eliminating the need for making holes in or other types of modifications to the mat and/or the cabin floor. As such, the manufacturing and assembly process can be simplified and less prone to positioning and alignment errors.

The positioning arrangement allows positioning the accessory mount in a moulding tool for forming the layers of the mat, to minimalize geometrical tolerances between features of the mat, such as anchoring arrangements and edges. Accordingly, a better build quality can be provided during assembly of the mat in the cabin, including the assembly of any mat accessories, such as a footrest.

The positioning arrangement can comprise one or more positioning slots, providing a moulding tool mounting reference, for aligning the accessory mount relative to a moulding tool. As such, the moulding tool mounting reference can e.g. engage with protrusions or other alignment means of the moulding tool.

The accessory mount comprises an anchoring arrangement, which may comprise any one or more of holes or slots, e.g. to engage with a corresponding protrusion extending from a mat accessory, such as a plug, bolt, screw, pin, key, or hook. The anchoring arrangement can further comprise any one or more of: clips, e.g. to bias or lock an engaging element of a mat accessory; nuts, e.g. to provide a threaded connection; pins, e.g. to provide a keyed connection; bayonet connectors, e.g. to provide a twist-lock connection; snap-fit connectors, e.g. comprising a biasing element to provide a snap-lock connection; electrical connectors, e.g. to provide an electrical connection between the accessory mount and a mat accessory; magnets, e.g. to provide a magnetic connection with a mat accessory comprising a magnetic material; and hooks, e.g. to provide a hook. The above described features and/or effects can be provided separately, or in any combination.

Preferably, the anchoring arrangement provides at least two anchoring slots at a distance along a driving direction of the vehicle. In this way, the anchoring arrangement is robust against external forces on an anchored mat accessory, e.g. caused by acceleration or deceleration of the vehicle.

To further improve the strength and robustness of the anchoring arrangement, the anchoring slots can have a long side extending along the driving direction of the vehicle.

The mat may further comprise a mat accessory, which can for example be any one or a combination of: a footrest; a cup holder; an accessory mat; an anti-wear element; a decoration element; a branding item; a thermal or electrical insulation part; a storage container; a foot switch; a cabin panel mount; an ECU compartment cover mount; and a seat. This list is non-exhaustive and non-limiting to the invention, yet merely intended to indicate that the present invention allows creating a variety of cabin configurations, without any modifications to the cabin, as the skilled person would understand.

In case the mat accessory is a footrest, the footrest may comprise an additional mount arranged for mounting the footrest to a cabin part, such as a dashboard panel or an engine tunnel. The additional mount can provide additional anchoring of the footrest, besides the anchoring arrangement of the accessory mount, e.g. to absorb forces exerted on the footrest by the driver's foot during braking or turning of the vehicle, or when the driver is on- or offboarding the vehicle.

Preferably, the formable material layer is made of a thermoplastic polyolefin compound material. As such, different properties can be given to the formable material layer, e.g. to facilitate forming the formable material layer or to improve strength or flexibility of the formable material layer.

The thermoplastic polyolefin compound material can for example comprise a fiber-reinforced material, to reinforce the shape of the formable material layer around the accessory mount, for improving the strength of the form-closing connection.

Preferably, the foam material layer is made of a polyurethane foam material, for ease of processing and because of its durable and flexible properties when cured.

The present invention can provide a universal, or standardized interface between the accessory mount and a mat accessory. As a consequence, the accessory mount can for example be an injection moulded part, e.g. made of a polymer or a metal, for ease of manufacturing.

The positioning arrangement can also provide a cabin floor mounting reference, for aligning the mat relative to the cabin floor. Accordingly, a highly accurate mounting reference can be provided, because the positioning and fixating of the accessory mount can be done in the same tool, with the same fixations, as the forming of the multi-layer mat. In contrast, mounting references in conventional mats may be provided by cutting holes or edges in the mat, in a cutting process which is typically done on a different jig than the forming process. By having the positioning arrangement provide a cabin floor mounting reference, the manufacturing and assembly tolerance stack up can be decreased, which in turn leads to smaller deviations and misalignments between features.

In some embodiments, the accessory mount is a seat mount, comprising a reinforced seat anchoring arrangement, and arranged for anchoring a seat on top of the mat to the cabin floor. This allows the seat to be mounted on top of the mat, as opposed to conventional seat mounting arrangements, in which the seat console comprises legs that protrude through the mat, e.g. through holes in the mat, for mounting directly to the cabin floor. When the accessory mount is a seat mount as described herein, the assembly process of mounting a seat can be improved.

### BRIEF DESCRIPTION OF THE DRAWINGS

The invention will be further elucidated in the figures:
FIG 1 illustrates a cross section view of an embodiment of a mat;
FIG 2 illustrates an isometric top view of an embodiment of a mat;
FIGs 3A and 3B provide an isometric top view of an embodiment of a mat, comprising a footrest;
FIG 4 illustrates a cross section view of an embodiment of a mat, comprising a reinforced seat anchoring arrangement.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

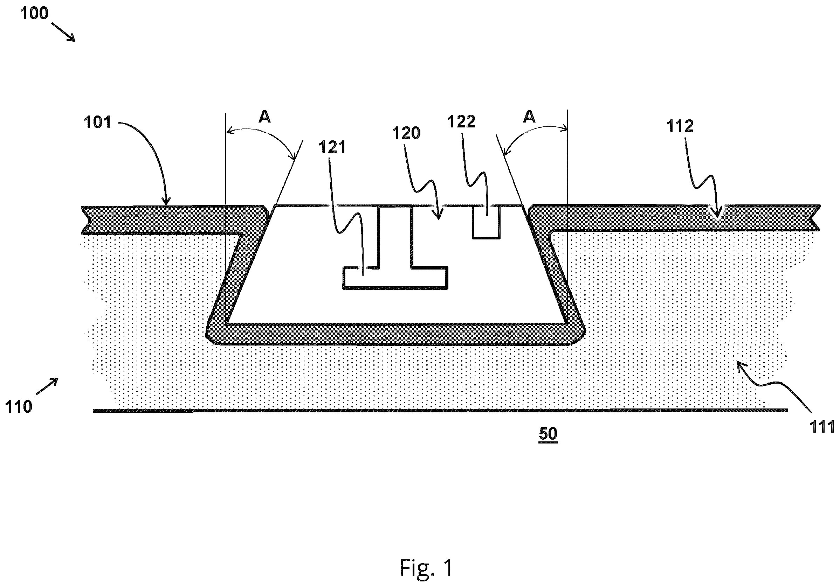

FIG 1 illustrates a cross section view of an embodiment of a mat 100, comprising a multi-layer 110, for covering a cabin floor 50 of a vehicle such as a truck or a bus. The mat 100 may also be suitable for covering a cabin floor of other types of vehicles, e.g. vehicles that may be employed in snowy, wet, or sandy environments, such as off-road vehicles, SUV's, and passenger cars. The multi-layer 110 comprises a formable material layer 112, which can for example be made of a material that is injection mouldable, thermoformable, or vacuum formable in a desired shape. The formable material layer 112 can e.g. be made of a thermoplastic polyolefin compound material, e.g. a compound material comprising a thermoplastic, an elastomer or rubber and a filler. The thermoplastic can e.g. comprise polypropylene (PP) or polyethylene (PE). The elastomer can e.g. comprise an ethylene propylene diene monomere (EPDM) rubber. The filler can for example comprise a fiber-reinforced material, such as fiberglass or a carbon fiber reinforced polymer.

To form the formable material layer 112 in the desired shape, a moulding tool, such as an injection moulding tool, thermoforming tool, or vacuum forming tool, can be provided with a mould insert, e.g. for forming a the formable material layer 112 to a shape of the mould insert. The shape, contour, or outer surface of the mould insert may at least partially define the shape of the formable material layer 112.

In the present invention, the mould insert is provided by an accessory mount 120 of the mat 100. The accessory mount 120 can for example be a solid part, e.g. an injection moulded, cast or milled part, or can be a sheet part, e.g. a folded sheet. The accessory mount 120 may e.g. be made of a polymer material, such as polypropylene (PP), a metal material, such as aluminium or steel, or any other type of material. The design and material properties of the accessory mount 120 should however be suitable for use as a mould insert, e.g. able to withstand specific process temperatures, forces, etc., depending on the type of forming process and layer materials used. For example, when used in a vacuum forming process, the accessory mount 120 may be provided with small holes or air channels, such that a vacuum can be created along the surfaces of the accessory mount 120, between the vacuum forming tool and the formable material layer 112, for forming the formable material layer 112 to the shape of the accessory mount 120.

The accessory mount 120 comprises a positioning arrangement 122 for positioning the accessory mount 120 in a moulding tool, e.g. to align the accessory mount 120 relative to a reference of the moulding tool and secure it in that position. The positioning mount 122 can e.g. comprise one or more recesses, holes, slots or cutouts in the accessory mount 120, and/or can comprise one or more edges or surfaces of the accessory mount 120. The accessory mount 120 is shaped with negative draft angles A1, A2, for providing a form-closing connection between the accessory mount 120 and the formable material layer 112. For example, as shown in FIG 1, the accessory mount 120 can have a trapezoid cross sectional shape, wherein side surfaces of the accessory mount 120 extend outwards, at negative draft angles A1, A2, from a top surface 101 of the mat 100 into an interior of the mat 100. As a result, after forming the formable material layer 112, the accessory mount 120 cannot be released from the formable material layer 112 without deforming or breaking the formable material layer 112. Accordingly, the accessory mount 120 is form-locked by the formable material layer 112. Negative draft angles A1 and A2 can be identical or different values, e.g. to provide symmetrical or asymmetrical locking properties.

In general, the accessory mount 120 has a cross section that is narrower towards the top surface 101 of the mat 100 and wider towards the interior of the mat 100, e.g. formed by negative draft angles A1 and A2, so that the accessory mount 120 can be form locked by the formable material layer 112.

Alternatively, or additionally, a similar form-locking cross sectional shape can e.g. be provided by a stepped side surface of the accessory mount 120, comprising one or more steps that extend outwards, e.g. in plane of the mat, forming a narrower cross section of the accessory mount 120 towards the top surface 101 of the mat 100 and a wider cross section towards the interior of the mat 100.

Any side surface of the accessory mount can alternatively or additionally be provided with hooks, protrusions, holes or slots, so that the accessory mount interlocks with the formable material layer 112, when the formable material layer 112 is formed to the shape of the accessory mount 120.

The mat 100 further comprises a foam material layer 111, which may for example be made of a polymer, such as polyurethane (PU), or a rubber material.

After forming the formable material layer 112 around the accessory mount 120, the foam material may be cast onto the formable material layer 112, and may be cured to provide a backing for reinforcing the shape of the formable material layer 112, to strengthen the form-closing connection between the formable material layer 112 and the accessory mount 120.

Depending on the purpose and application of the mat 100, the multi-layer 110 may comprise additional material layers, e.g. with different material properties with respect to insulation, sealing, flexibility or strength. An additional material layer can for example be applied, formed, or cast onto the formable material layer 112 and/or onto the foam material layer 111.

After forming the material layers, the accessory mount 120, previously used as mould insert, can be removed from the moulding tool and the accessory mount 120 has become a part of the mat 100.

The accessory mount 120 comprises an anchoring arrangement 121 for anchoring a mat accessory to the accessory mount 120. The mat accessory can for example be a footrest, a cup holder, an accessory mat, an anti-wear or anti-slip element, a decoration element, a branding item, a thermal or electrical insulation part, a storage container, a foot switch, a cabin panel mount, an ECU compartment cover mount, a seat, or any combination thereof. However, these are just exemplary mat accessories and the invention is not limited to these examples, as the skilled person would understand. Beneficially, the accessory mount 120 provides an anchoring arrangement 121 that can anchor various types of mat accessories to the mat 100 by providing a standardized, or universal interface between the accessory mount 120 and the mat accessory 130.

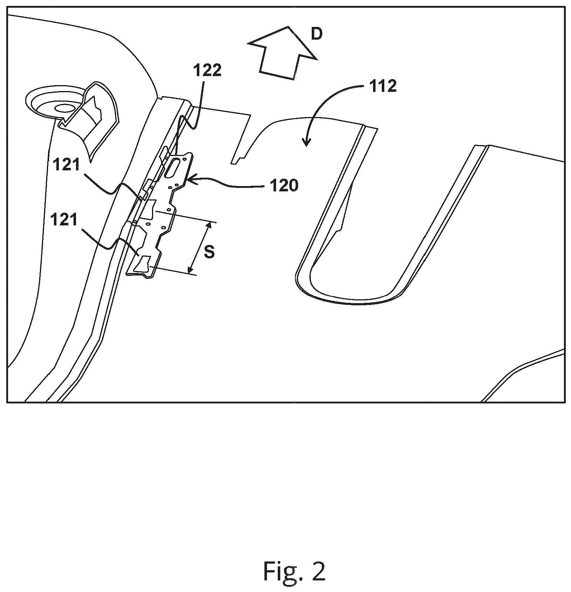

FIG 2 illustrates an isometric top view of an embodiment of a mat 100, comprising an accessory mount 120 which is form-locked by the formable material layer 112. The accessory mount 120 comprises an anchoring arrangement 121 for anchoring a mat accessory to the accessory mount 120. For this purpose, the anchoring arrangement 121 comprises a number of slots, e.g. anchoring slots having a long side and a short side. The slots may be provided with clips, pins, snap-fit connections, magnets, or hooks, e.g. on internal surfaces of the slots, to provide additional anchoring elements.

As shown in FIG 2, the anchoring arrangement 121 provides two anchoring slots at a distance S along a driving direction D of the vehicle. In this way, the anchoring arrangement 121 is robust against forces on an anchored mat accessory, e.g. caused by acceleration or deceleration of the vehicle. To further improve the strength and robustness of the anchoring arrangement 121, the anchoring slots may have a long side arranged for extending along the driving direction D of the vehicle.

Alternatively, or additionally, the anchoring arrangement 121 can comprise any other type of fastening feature, including but not limited to holes, grooves, clips, pins, bayonet connections, snap-fit connections, magnets, hooks, or any combination thereof. The anchoring arrangement 121 may further provide threaded connections, e.g. by including nuts, or may comprise electrical connectors, e.g. for providing an electrical connection between the mat accessory and another component of the vehicle. For example, the mat accessory can be a foot switch, which is coupled to an ECU of the vehicle by an electrical connector, or the mat accessory can be a fan or a heater, which is coupled to a battery of the vehicle by an electrical connector. Alternatively, the electrical connector can provide an electrical connection between mat accessories, e.g. in case the mat 100 comprises multiple accessory mounts 120 and/or multiple mat accessories.

The accessory mount 120 further comprises a positioning arrangement 122, comprising a positioning slot that provides a moulding tool mounting reference, for aligning the accessory mount 120 relative to a moulding tool. The positioning arrangement may comprise one or more slots. Alternatively, or additionally, the positioning arrangement can comprise one or more holes, recesses, edges, surfaces or other geometrical features suitable for aligning the accessory mount 120 relative to a moulding tool.

The positioning arrangement 122 may also provide a cabin floor mounting reference, for aligning the mat 100 relative to the cabin floor. Accordingly, a highly accurate mounting reference can be provided, because the positioning and fixating of the accessory mount 120 is done in the same tool, with the same fixations, as the forming of the multi-layer mat 100. In contrast, mounting references in conventional mats may be provided by cutting holes or edges in the mat, in a cutting process which is typically done on a different jig than the forming process. By having the positioning arrangement 122 provide a cabin floor mounting reference, the manufacturing and assembly tolerance stack up can be decreased, which in turn leads to smaller deviations and misalignments between features.

Accordingly, when anchoring a mat accessory to the accessory mount 120, the position of the mat accessory relative to the mat 100, as well as the position of the mat 100 relative to the cabin floor, can be more accurately defined.

The mat accessory can for example be a footrest, which may be anchored on the left hand side of the mat 100 for providing a support surface for the driver's left foot. Alternatively, the mat accessory can be a cup holder, e.g. for holding cups, cans or bottles, or can be another type of storage container, for holding goods. The mat accessory can also be an accessory mat, an anti-wear or anti-slip element, a decoration element, or a branding item, which can for instance be anchored on top of the mat 100. The mat accessory can further be a thermal or electrical insulation part, e.g. to provide additional protection for the driver against extreme temperatures or against electrical hazards. The mat accessory can be a foot switch, e.g. for providing a signal to control or operate another device or computer of the vehicle. Furthermore, the mat accessory can serve as a further mounting element, e.g. as a cabin panel mount or as an engine control unit (ECU) compartment cover mount, or a seat mount for mounting a seat of the vehicle. The above described embodiments of mat accessories are merely intended to provide several non-limiting examples, and the skilled person would understand that other embodiments of mat accessories can be envisioned without inventive effort, that functionalities of the above mentioned mat accessories can be combined into a multi-functional mat accessory, and that multiple mat accessories can be anchored on a single mat 100, e.g. by having more than one accessory mount 120 form-locked by the formable material layer 112.

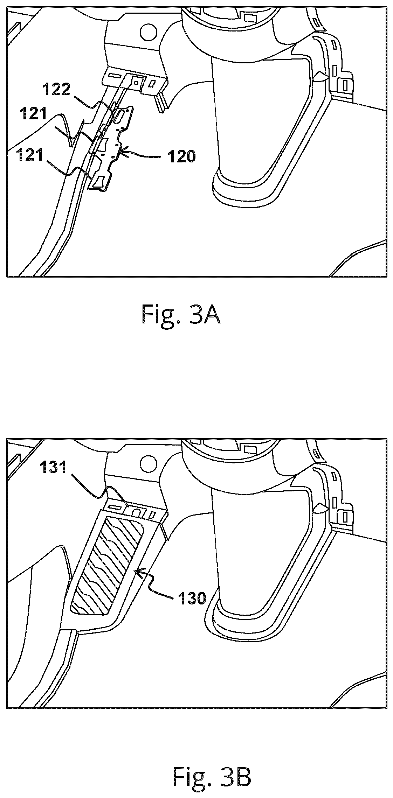

FIGs 3A and 3B provide an isometric top view of an embodiment of a mat 100, comprising a mat accessory which is a footrest 130. As shown, the footrest 130 may be anchored to an accessory mount 120, such that the footrest 130 is located on the left hand side of a steering column of the vehicle. The footrest 130 comprises an additional mount 131 arranged for mounting the footrest 130 to a cabin part, such as an engine tunnel or a dashboard panel. The additional mount 131 can e.g. comprise a hole or a slot in the footrest 130, for allowing a bolted or screwed connection to the cabin part. Alternatively, the additional mount can comprise any other fastening means, e.g. for proving a pin connection, a plug connection, a snap-fit connection, a hook-fit connection, a magnetic connection, and/or an electric connection, e.g. when the footrest includes a foot switch.

The footrest 130 may comprise more than one additional mount 131, e.g. on a short side of the foot rest for connecting to the dashboard panel and/or on a long side of the footrest for connecting to the engine tunnel. The additional mount 131 can provide additional anchoring of the footrest 130, besides the anchoring arrangement 121 of the accessory mount 120, e.g. to absorb forces exerted on the footrest 130 by the driver's foot during braking or turning of the vehicle, or when the driver is on- or offboarding the vehicle.

Beneficially, the accessory mount 120 comprises a positioning arrangement 122 for positioning the accessory mount 120 in a moulding tool, which can also be used for positioning the accessory mount 120 relative to the cabin floor. This means that the geometrical tolerances, or spread between features of the mat 100 can be minimalized, thus providing a better build quality during assembly of the mat 100 in the cabin, including the assembly of any mat accessories such as a footrest 130.

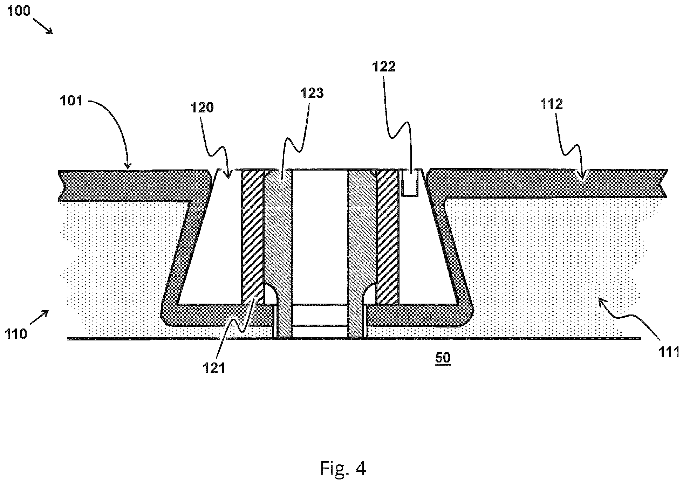

As illustrated in the cross section view of the exemplary mat 100 of FIG 4, the accessory mount 120 can comprise a reinforced seat anchoring arrangement 123, e.g. to anchor a chair or the like. In such case, for example, the reinforced seat anchoring arrangement 123 may comprise one or more inserts, e.g. made of metal, that are mountable in one or more holes or slots of the anchoring arrangement 121. Anchoring arrangement 121 and accessory mount 120 can also be made as one part if possible. After forming the formable material layer 112 and applying the foam material layer 111, one or more corresponding holes may be cut in the multi-layer mat 100, so that the seat anchoring arrangement 123 can be mounted to the anchoring arrangement 121 while protruding through the holes in the mat 100. Accordingly, a reinforced connection is formed by the reinforced seat anchoring arrangement 123 between a top surface 101 of the mat 100 and the cabin floor 50. Thereby, the seat anchoring arrangement can form a seat mount for anchoring a seat on top of the mat 100 to the cabin floor 50. The reinforced seat anchoring arrangement 123 can e.g. comprise one or more tubular inserts, arranged to provide a relatively high strength and stiffness in an axial direction extending from a top surface 101 of the mat 100 to the cabin floor 50, e.g. to absorb compressive forces from the seat onto the cabin floor. For example, the seat mount can be made of a metal material, such as steel or titanium, or a fiber reinforced composite material.

The seat mount 120 can comprise a positioning arrangement 122 for positioning the seat mount in a moulding tool, when using the seat mount as a mould insert for forming the formable material layer 112. The positioning arrangement can also be used for positioning and/or mounting the seat mount 120 relative to the cabin floor 50. The anchoring arrangement 121 of the seat mount 120, e.g. comprising one or more threaded holes, slots, or other fixation means as described herein, can be used for anchoring the seat to the seat mount 120.

By having the accessory mount 120 form a seat mount, e.g. as described above, the assembly process can be improved by allowing the seat to be mounted on top of the mat 100, as opposed to a conventional seat mounting arrangement, in which the seat consoles comprises legs that protrude through the mat, e.g. through holes in the mat.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

The invention applies not only to automotive related applications where the mat is used for covering a cabin floor, but also to other technical, agricultural or industrial applications where a mat is used. It will be clear to the skilled person that the invention is not limited to any embodiment herein described and that modifications are possible which may be considered within the scope of the appended claims. In the claims, any reference signs shall not be construed as limiting the claim.

## Claims

1. A mat (100) for covering a cabin floor (50) of a vehicle, comprising:
- a multi-layer (110), comprising a foam material layer (111) and a formable material layer (112); **characterized in that** the mat (100) comprises
- an accessory mount (120), comprising an anchoring arrangement (121) for anchoring a mat accessory (130) to the accessory mount (120), and a positioning arrangement (122) for positioning the accessory mount (120) in a moulding tool, thereby providing a mould insert for forming the formable material layer (112) to a shape of the accessory mount (120);
wherein the accessory mount (120) is shaped with a cross section that is narrower towards a top surface (101) of the mat and wider towards an interior of the mat, for providing a form-closing connection between the accessory mount (120) and the formable material layer (112), so that the accessory mount (120) is form-locked by the formable material layer (112).

2. Mat (100) according to claim 1, wherein the positioning arrangement (122) comprises one or more positioning slots, providing a moulding tool mounting reference, for aligning the accessory mount (120) relative to a moulding tool.

3. Mat (100) according to any preceding claim, wherein the anchoring arrangement (121) comprises any one or more of: holes; clips; slots; nuts; pins; bayonet connections; snap-fit connections; electrical connectors; magnets; and hooks.

4. Mat (100) according to claim 3, wherein the anchoring arrangement (121) provides at least two anchoring slots at a distance along a driving direction (D) of the vehicle.

5. Mat (100) according to claim 4, wherein the anchoring slots have a long side extending along the driving direction (D) of the vehicle.

6. Mat (100) according to any preceding claim, further comprising a mat accessory (130) which is any one or a combination of: a footrest; a cup holder; an accessory mat; an anti-wear element; a decoration element; a branding item; a thermal or electrical insulation part; a storage container; a foot switch; a cabin panel mount; an engine control unit (ECU) compartment cover mount; and a seat mount.

7. Mat (100) according to claim 6, wherein the mat accessory (130) is a footrest, and wherein the footrest comprises an additional mount (131) arranged for mounting the footrest to a cabin part.

8. Mat (100) according to any preceding claim, wherein the formable material layer (112) is made of a thermoplastic polyolefin compound material.

9. Mat (100) according to claim 8, wherein the thermoplastic polyolefin compound material comprises a fiber-reinforced material.

10. Mat (100) according to any preceding claim, wherein the foam material layer (111) is made of a polyurethane foam material.

11. Mat (100) according to any preceding claim, wherein the accessory mount (120) is an injection moulded part.

12. Mat (100) according to any preceding claim, wherein the positioning arrangement (122) provides a cabin floor mounting reference, for aligning the mat (100) relative to the cabin floor (50).

13. Mat (100) according to any preceding claim, wherein the accessory mount (120) is a seat mount, comprising a reinforced seat anchoring arrangement (123), and arranged for anchoring a seat on top of the mat (100) to the cabin floor (50).

## Patentansprüche

1. Matte (100) zum Abdecken eines Kabinenbodens (50) eines Fahrzeugs, die Folgendes umfasst:
- Mehrschichtverbund (110), der eine Schaumstoffschicht (111) und eine formbare Materialschicht (112) umfasst; **dadurch gekennzeichnet, dass** die Matte (100)
- eine Zubehörhalterung (120) umfasst, die eine Verankerungsanordnung (121) zum Verankern eines Mattenzubehörs (130) an der Zubehörhalterung (120) und eine Positionierungsanordnung (122) zum Positionieren der Zubehörhalterung (120) in einem Formwerkzeug umfasst, wodurch ein Formeinsatz zum Formen der formbaren Materialschicht (112) in eine Form der Zubehörhalterung (120) bereitgestellt wird;
wobei die Zubehörhalterung (120) mit einem Querschnitt geformt ist, der in Richtung einer oberen Oberfläche (101) der Matte schmaler und in Richtung eines Inneren der Matte breiter ist, um eine formschlüssige Verbindung zwischen der Zubehörhalterung (120) und der formbaren Materialschicht (112) bereitzustellen, so dass die Zubehörhalterung (120) durch die formbare Materialschicht (112) formschlüssig ist.

2. Matte (100) nach Anspruch 1, wobei die Positionierungsanordnung (122) einen oder mehrere Positionierungsschlitze umfasst, die eine Formwerkzeug-Montagereferenz bereitstellen, um die Zubehörhalterung (120) relativ zu einem Formwerkzeug auszurichten.

3. Matte (100) nach einem der vorhergehenden Ansprüche, wobei die Verankerungsanordnung (121) eines oder mehrere der folgenden Elemente umfasst: Löcher; Klemmen; Schlitze; Muttern; Stifte; Bajonettverbindungen; Schnappverbindungen; elektrische Anschlüsse; Magneten; und Haken.

4. Matte (100) nach Anspruch 3, wobei die Verankerungsanordnung (121) mindestens zwei Verankerungsschlitze in einem Abstand entlang einer Fahrtrichtung (D) des Fahrzeugs aufweist.

5. Matte (100) nach Anspruch 4, wobei die Verankerungsschlitze eine Längsseite haben, die sich entlang der Fahrtrichtung (D) des Fahrzeugs erstreckt.

6. Matte (100) nach einem der vorangehenden Ansprüche, die ferner ein Mattenzubehör (130) umfasst, das eines oder eine Kombination folgender Elemente ist: eine Fußstütze; einen Becherhalter; eine Zubehörmatte; ein Anti-Verschleiß-Element; ein Dekorationselement; ein Branding-Artikel; ein thermisch oder elektrisch isolierendes Teil; einen Vorratsbehälter; einen Fußschalter; eine Kabinenverkleidungshalterung; eine Halterung für die Abdeckung des Motorsteuergeräts (ECU); und eine Sitzhalterung.

7. Matte (100) nach Anspruch 6, wobei das Mattenzubehör (130) eine Fußstütze ist, und wobei die Fußstütze eine zusätzliche Halterung (131) umfasst, die zur Befestigung der Fußstütze an einem Kabinenteil angeordnet ist.

8. Matte (100) nach einem der vorhergehenden Ansprüche, wobei die verformbare Materialschicht (112) aus einem thermoplastischen Polyolefin-Verbundmaterial hergestellt ist.

9. Matte (100) nach Anspruch 8, wobei das thermoplastische Polyolefin-Verbundmaterial ein faserverstärktes Material umfasst.

10. Matte (100) nach einem der vorhergehenden Ansprüche, wobei die Schaumstoffschicht (111) aus einem Polyurethanschaumstoff hergestellt ist.

11. Matte (100) nach einem der vorhergehenden Ansprüche, wobei die Zubehörhalterung (120) ein Spritzgussteil ist.

12. Matte (100) nach einem der vorhergehenden Ansprüche, wobei die Positionierungsanordnung (122) eine Kabinenbodenreferenz bereitstellt, um die Matte (100) relativ zum Kabinenboden (50) auszurichten.

13. Matte (100) nach einem der vorhergehenden Ansprüche, wobei die Zubehörhalterung (120) eine Sitzhalterung ist, die eine verstärkte Sitzverankerungsanordnung (123) umfasst und zur Verankerung eines Sitzes auf der Matte (100) am Kabinenboden (50) angeordnet ist.

## Revendications

1. Tapis (100) pour recouvrir un plancher de cabine (50) d'un véhicule, comprenant :
- une multicouche (110), comprenant une couche de matériau en mousse (111) et une couche de matériau formable (112) ; **caractérisé en ce que** le tapis (100) comprend
- un élément de montage d'accessoire (120), comprenant un agencement d'ancrage (121) pour ancrer un accessoire de tapis (130) à l'élément de montage d'accessoire (120), et un agencement de positionnement (122) pour positionner l'élément de montage d'accessoire (120) dans un outil de moulage, fournissant ainsi un insert de moule pour former la couche de matériau formable (112) à une forme de l'élément de montage d'accessoire (120) ;
dans lequel l'élément de montage d'accessoire (120) est façonné avec une section transversale qui est plus étroite vers une surface supérieure (101) du tapis et plus large vers un intérieur du tapis, pour fournir une liaison par fermeture de forme entre l'élément de montage d'accessoire (120) et la couche de matériau formable (112), de sorte que l'élément de montage d'accessoire (120) est verrouillé par complémentarité de forme par la couche de matériau formable (112).

2. Tapis (100) selon la revendication 1, dans lequel l'agencement de positionnement (122) comprend une ou plusieurs fentes de positionnement, fournissant une référence de montage d'outil de moulage, pour aligner l'élément de montage d'accessoire (120) par rapport à un outil de moulage.

3. Tapis (100) selon une quelconque revendication précédente, dans lequel l'agencement d'ancrage (121) comprend un ou plusieurs quelconques parmi : trous ; attaches ; fentes ; écrous ; broches ; liaisons à baïonnette ; liaisons encliquetables ; connecteurs électriques ; aimants et crochets.

4. Tapis (100) selon la revendication 3, dans lequel l'agencement d'ancrage (121) présente au moins deux fentes d'ancrage à une certaine distance le long d'une direction de conduite (D) du véhicule.

5. Tapis (100) selon la revendication 4, dans lequel les fentes d'ancrage ont un côté long s'étendant le long de la direction de conduite (D) du véhicule.

6. Tapis (100) selon une quelconque revendication précédente, comprenant en outre un accessoire de tapis (130) qui est l'un quelconque ou une combinaison de : un repose-pieds ; un porte-gobelet ; un tapis d'accessoire ; un élément anti-usure ; un élément de décoration ; un article de marquage ; une partie d'isolation thermique ou électrique ; un coffre de rangement ; un interrupteur au pied ; un élément de montage de panneau cabine ; un élément de montage de couvercle de compartiment d'unité de commande de moteur (ECU) et un élément de montage de siège.

7. Tapis (100) selon la revendication 6, dans lequel l'accessoire de tapis (130) est un repose-pieds, et dans lequel le repose-pieds comprend un élément de montage supplémentaire (131) agencé pour monter le repose-pieds sur une partie de cabine.

8. Tapis (100) selon une quelconque revendication précédente, dans lequel la couche de matériau formable (112) est composée d'un matériau composite en polyoléfine thermoplastique.

9. Tapis (100) selon la revendication 8, dans lequel le matériau composite en polyoléfine thermoplastique comprend un matériau renforcé par des fibres.

10. Tapis (100) selon une quelconque revendication précédente, dans lequel la couche de matériau en mousse (111) est composée d'un matériau en mousse de polyuréthane.

11. Tapis (100) selon une quelconque revendication précédente, dans lequel l'élément de montage d'accessoire (120) est une pièce moulée par injection.

12. Tapis (100) selon une quelconque revendication précédente, dans lequel l'agencement de positionnement (122) fournit une référence de montage sur le plancher de cabine, pour aligner le tapis (100) par rapport au plancher de cabine (50).

13. Tapis (100) selon une quelconque revendication précédente, dans lequel l'élément de montage d'accessoire (120) est un élément de montage de siège, comprenant un agencement d'ancrage de siège renforcé (123), et agencé pour ancrer un siège au-dessus du tapis (100) au plancher de cabine (50).
